# EUROPÄISCHE PATENTANMELDUNG

(11) **EP 1 441 064 A1**
(43) Veröffentlichungstag der Anmeldung: **28.07.2004**
(21) Anmeldenummer: 04000395.6
(22) Anmeldetag: 10.01.2004
(51) Int. Cl.: D21B 1/32, D21F 1/70, D21D 5/18, B03D 1/14

(54) **Verfahren und Vorrichtung zur Belüftung von Suspensionen**

(30) Priorität: 24.01.2003 AT 892003
(71) Anmelder: Andritz AG, 8045 Graz (AT)
(72) Erfinder: Gabl, Helmuth, Dipl.-Ing. Dr., 8046 Graz (AT)
(74) Vertreter: Schweinzer, Friedrich

(57) **Zusammenfassung**

Die Erfindung betrifft ein Verfahren zur Belüftung von Suspensionen, insbesondere zur Flotation, beispielsweise beim Deinken von Faserstoffsuspensionen, mit einer oder mehreren zwei Stufen und / oder Zellen P1, P2, P3, P4, S1, S2, wobei in jeder Stufe / Zelle P1, P2, P3, P4, S1, S2 ein eigener, getrennter Flüssigkeitskreislauf 6 vorgesehen ist. Zur Verbesserung der Ascheabscheidung ist erfindungsgemäß vorgesehen, dass ein Waschprozess 12, 12', 16, 18 zwischengeschaltet ist. Weiters betrifft die Erfindung eine Vorrichtung zur Durchführung des Verfahrens.

## Beschreibung

Die Erfindung betrifft ein Verfahren zur Belüftung von Suspensionen, insbesondere zur Flotation, beispielsweise beim Deinken von Faserstoffsuspensionen, mit einer oder mehreren Stufen und / oder Zellen, wobei in jeder Stufe / Zelle ein eigener, getrennter Flüssigkeitskreislauf vorgesehen ist. Weiters betrifft die Erfindung eine Vorrichtung zur Durchführung des Verfahrens.

Ein derartiges Verfahren ist z.B. aus der EP 1 124 001 A2 bekannt, wobei die einzelnen Flotationsstufen auch z.B. nach der US 4,255,262, EP 0 243 690, DE 31 20 202 oder US 6,208,549 ausgeführt sein können. Derartige Verfahren werden zur Abtrennung von Störstoffen und Druckfarbenpartikel aus insbesondere in der Altpapieraufbereitung hergestellten Faserstoffsuspensionen eingesetzt. Durch die Anwendung derartiger Verfahren wird eine unspezifische Abtrennung von mineralischen Bestandteilen (z.B. Füllstoffen etc.) bewirkt, da diese in der chemischen Oberflächenbeschaffenheit (insbesondere Ladung) unterschiedlich zu den relativ leicht hydrophobierbaren Druckpartikeln in der Faserstoffsuspension reagieren. Zudem ist das spezifische Gewicht der mineralischen Anteile ca. doppelt bis dreifach höher als das der Druckpartikel. Bei den bekannten Verfahren treten jedoch bei der selektiven Flotation einige Nachteile auf. Wird z.B. versucht mittels Änderungen im Prozess eine gezielte Abscheidung von Füllstoffen zu erzielen, tritt zwangsläufig eine Reduktion der Effizienz in der Druckfarbtrennung auf, wodurch zusätzliche Änderungen in der Begasung, Anpassungen an die Rohstoffschwankungen und Durchsatzänderungen erforderlich werden. Weiters steigt bei Erhöhung der Überlaufmenge für eine Erhöhung der Abscheidung der mineralischen Stoffe auch der Faserverlust im gleichen Verhältnis mit an, wodurch der Aufwand zur Entsorgung und der Rohstoffeinsatz erhöht werden.

Die Erfindung hat das Ziel, bei Aufrechterhaltung der Strömungsführung und Begasung die obigen Nachteile zu reduzieren bzw. zu vermeiden.

Die Erfindung ist daher, dadurch gekennzeichnet, dass ein Waschprozess zwischengeschaltet ist, wobei der Waschprozess in den Flüssigkeitskreislauf einer Zelle, beispielsweise einer Primär- oder Sekundärzelle, oder zwischen den Zellenstufen, d.h. zwischen Primär- und Sekundärzellen zwischengeschaltet sein kann. Dadurch wird es möglich, Ascheanteile in einfacher Weise selektiv abzuscheiden.

Wird die Feststoffsuspension vor Eintritt in die Sekundärzellen auf ca. 0,6 - 1,4 % Stoffdichte, insbesondere 0,8 - 1,3 % Stoffdichte, verdünnt, so kann die Flotationseffizienz gesteigert werden.

Wenn gemäß einer vorteilhaften Weiterbildung der Erfindung zumindest in den Kreislauf zweier Zellen je ein Waschprozess zwischengeschaltet ist, kann die Ascheabscheidung noch wesentlich verbessert werden.

Werden dabei die Gutstoffströme von zumindest zwei Waschprozessen gemeinsam einem weiteren Waschprozess (sogenannte Doppelwäsche) zugeführt ist noch eine weitere Steigerung der Ascheabscheidung bei vermindertem Faserstoffverlust erzielbar.

Besonders günstig hat sich erwiesen, wenn die zumindest zwei Waschprozesse in den Kreislauf von Primärzellen zwischengeschaltet sind.

Vorteilhaft ist es, wenn der Gutstoff des Gesamtverfahrens bei einem Eingangsfüllstoffanteil von ca. 23 % und höher einen Ascheanteil von unter ca. 20 %, vorteilhaft unter 15 % aufweist. Dadurch kann der Gutstoff bei geringem Faserverlust wieder in den Prozess zurückgeführt werden.

Weiters betrifft die Erfindung eine Vorrichtung zur Belüftung von Suspensionen, insbesondere zur Flotation, beispielsweise beim Deinken von Faserstoffsuspensionen, mit einer oder mehreren Stufen und / oder Zellen, wobei in jeder Stufe / Zelle ein eigener, getrennter Flüssigkeitskreislauf vorgesehen ist. Diese ist erfindungsgemäß dadurch gekennzeichnet, dass ein Wäscher zwischengeschaltet ist, wobei der Wäscher in den Flüssigkeitskreislauf einer Zelle, beispielsweise einer Primär- oder Sekundärzelle und / oder zwischen den Zellenstufen, d.h. zwischen Primär- und Sekundärzellen zwischengeschaltet werden kann.

Wird erfindungsgemäß zumindest in den Kreislauf zweier Zellen je ein Wäscher zwischengeschaltet, kann die Asche- Füllstoffabscheidung noch wesentlich verbessert werden.

Wenn die Gutstoffströme der zumindest zwei Wäscher gemeinsam einem weiteren Wäscher zugeführt werden, ist noch eine weitere Steigerung der Ascheabscheidung erzielbar.

Eine weitere Reduzierung der Faserverluste bei Verkleinerung der Volumenströme aus dem Flotations-Wasch-System kann durch Nachwäsche der gesammelten Rejektströme erreicht werden.

Weiters hat sich vorteilhaft erwiesen dass die zumindest zwei Wäscher in den Kreislauf von Primärzellen zwischengeschaltet sind.

Eine günstige Ausgestaltung ergibt sich, wenn der bzw. die Wäscher als Rotationswäscher mit vertikaler Rotorachse oder alternativ als Walzenwäscher ausgebildet ist bzw. sind.

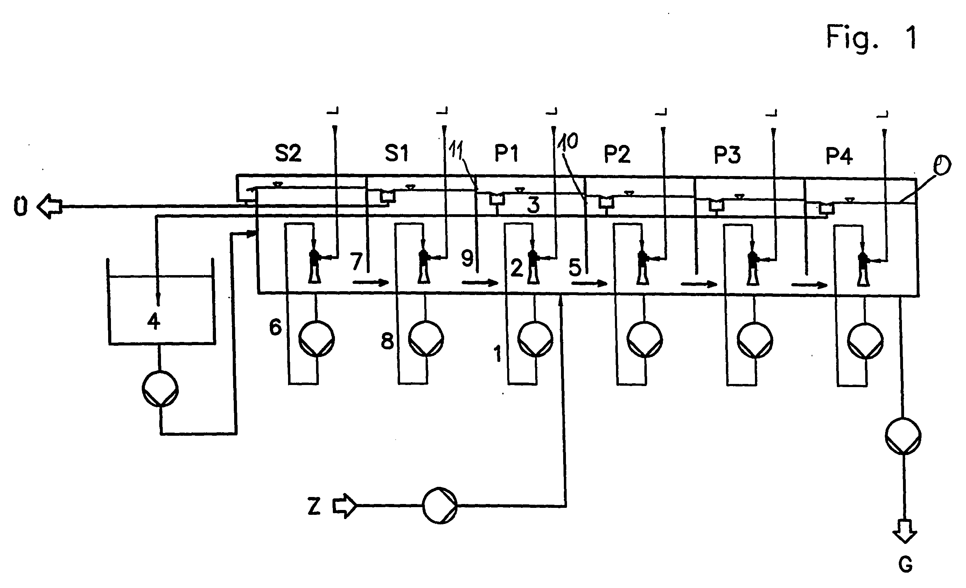

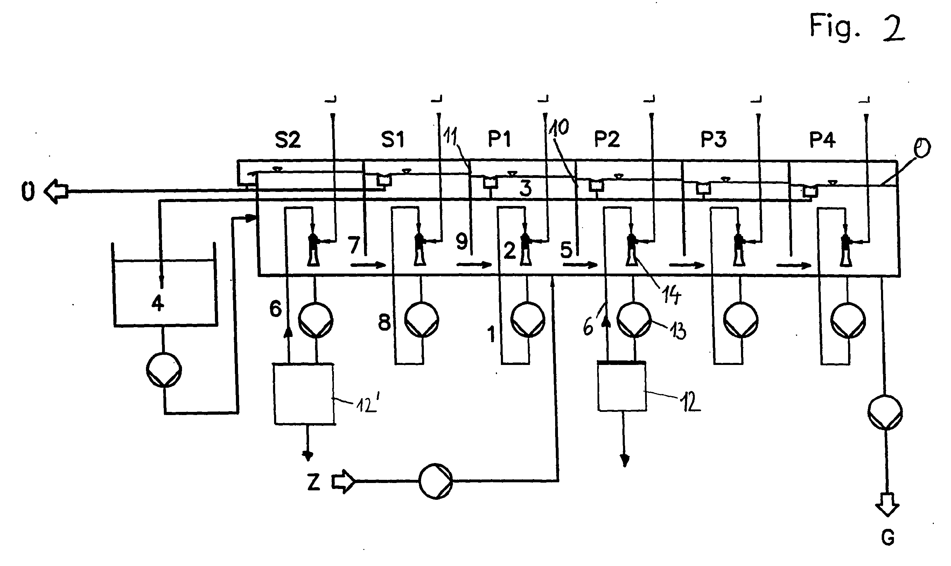

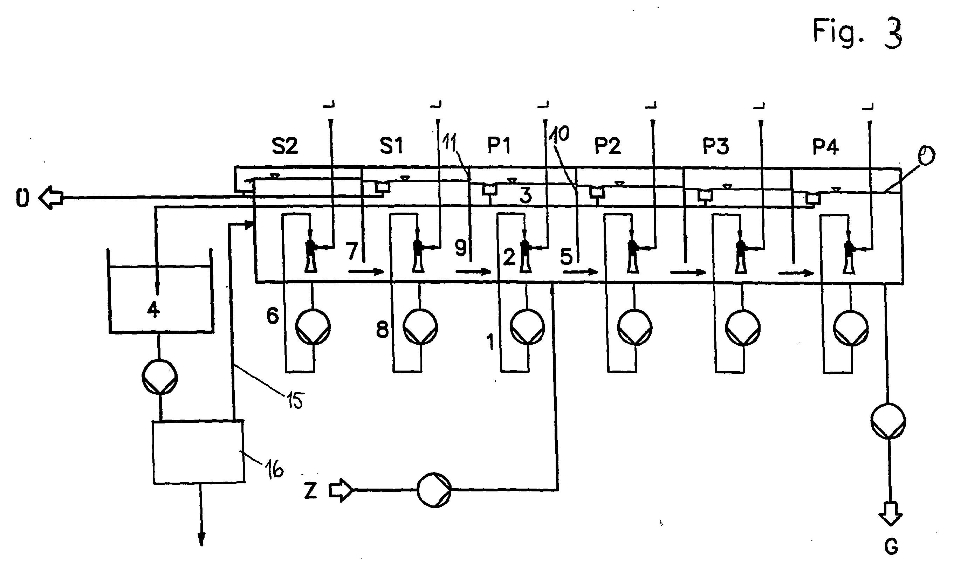

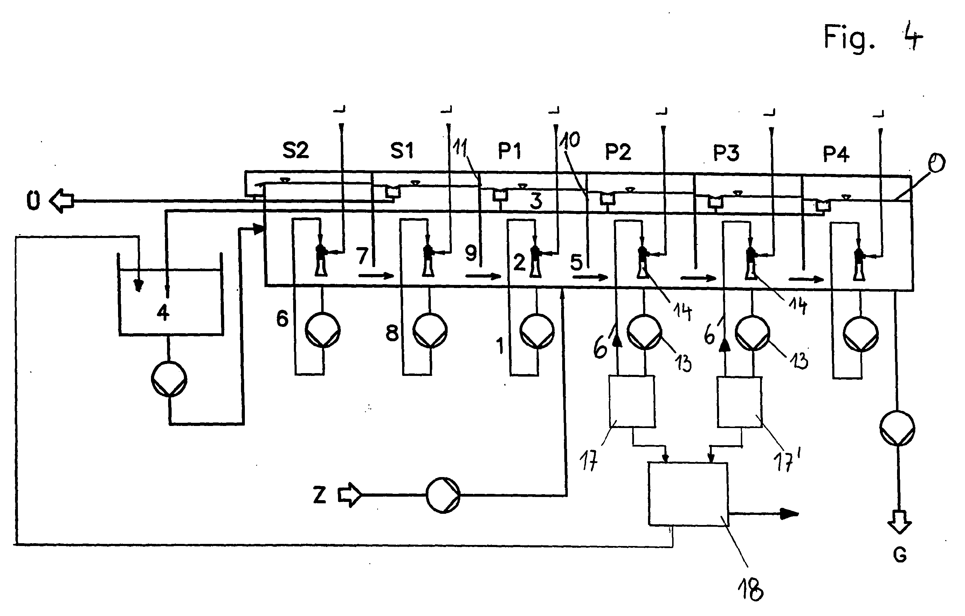

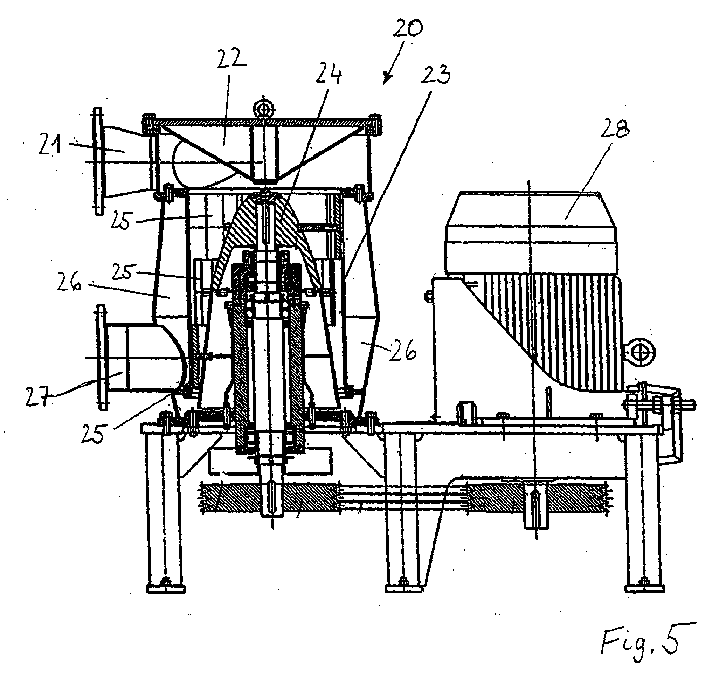

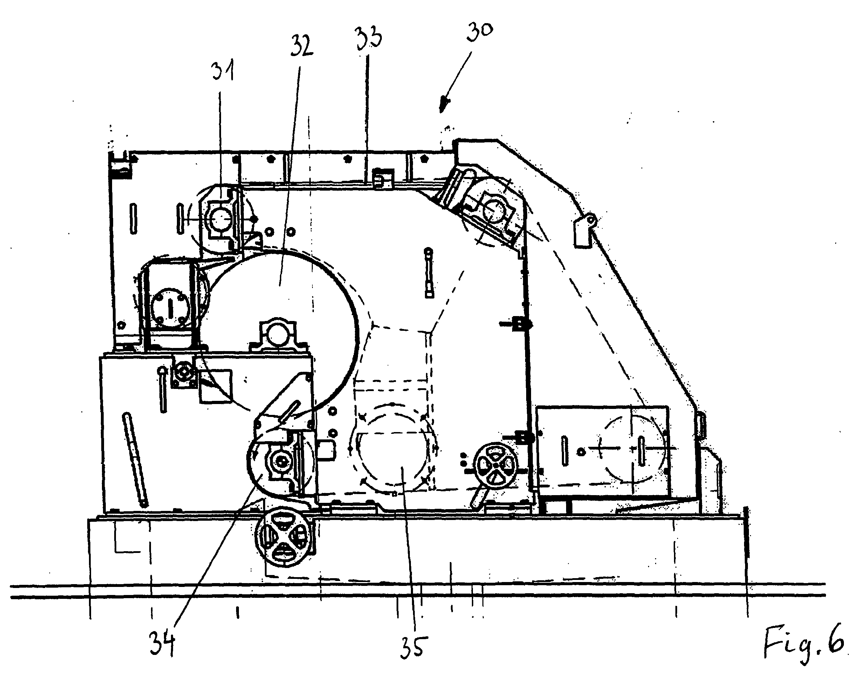

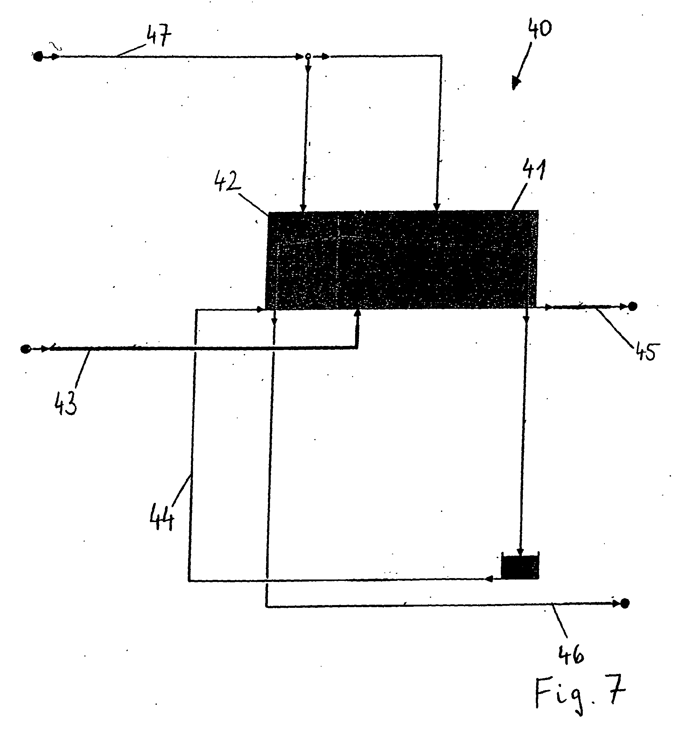

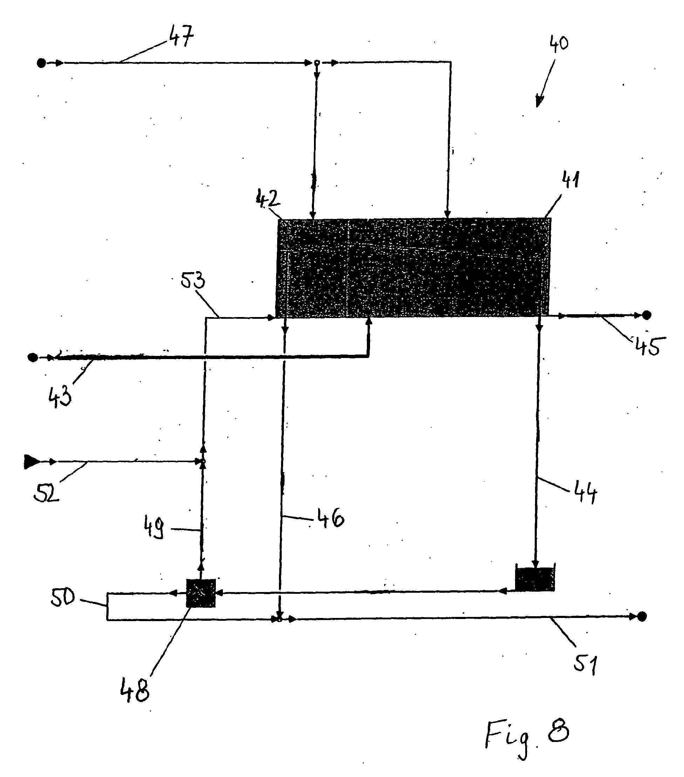

Die Erfindung wird nun anhand der Zeichnungen beispielhaft beschrieben, wobei Fig. 1 eine Flotationsanlage nach dem Stand der Technik, Fig. 2 eine Variante der Erfindung, Fig. 3 eine weitere Variante der Erfindung, Fig. 4 eine besonders günstige Variante der Erfindung, Fig. 5 eine Variante eines Wäschers, Fig. 6 eine alternative Variante eines Wäschers, Fig. 7 eine Stoffbilanz nach dem Stand der Technik und Fig. 8 eine Stoffbilanz gemäß der Variante der Erfindung nach Fig. 3 darstellt.

In Fig. 1 ist eine Flotationsanlage nach dem Stand der Technik mit vier Primärzellen P1, P2, P3, P4 und zwei Sekundärzellen S1, S2, schematisch dargestellt. Der Zulauf der Faserstoffsuspension Z wird an geeigneter Stelle in die erste Primärzelle P1 eingebracht. Die Blasen werden über den vom Zulauf entkoppelten Kreislauf 1 innerhalb dieser Zelle mit dem Injektor 2 durch Ansaugung von Luft L und Vermischen mit der Suspension erzeugt. Die gesamte Flotationsanlage ist zum überwiegenden Teil mit Suspension gefüllt, an deren Oberfläche O sich ein Schaum bildet, der einen möglichst großen Teil der auszuflotierenden Stoffe und Druckfarbenpartikel enthält. Der von Druckfarben und Störstoffen in der ersten Primärzelle P1 gereinigte Gutstoff tritt durch eine am Boden angeordnete Öffnung 5 in der Trennwand 10 zur zweiten Primärzelle P2 über. Dort und in allen weiteren Primärzellen wird die Suspension in gleicher Weise, mit Blasenerzeugungsinjektoren, die durch zelleninterne Kreisläufe betrieben werden, behandelt und tritt am Ende der Anlage als Gutstoff G aus. Der gesammelte Schaum aller Primärzellen P1 bis P4 kann über eine Schaumrinne 3 in einen Behälter 4 abfließen. Aus diesem Zwischenbehälter 4 wird der inzwischen weitgehend entschäumte Überlauf in die Sekundärzelle S2 eingebracht. Die Begasung erfolgt dort wieder um den zelleninternen Kreislauf 6. Der Übertritt des Gutstoffes der Sekundärzelle S2 in die Sekundärzelle S1 erfolgt durch die am Boden angeordnete Öffnung 7. Nach der Begasung mittels Kreislaufs 8 kann der Schaum der Sekundärzellen als Überlauf Ü abgeführt werden. Der Gutstoff der Sekundärzelle S1 gelangt durch die am Boden angeordnete Öffnung 9 in der Trennwand 11 in die erste Primärzelle P1.

Grundsätzlich kann die Waschstufe erfindungsgemäß an mehreren Stellen zwischengeschaltet werden. Sie kann in den Kreislauf einer Primärzelle, einer Sekundärzelle oder zwischen die Primär- und Sekundärstufe geschaltet werden. In Fig. 2 wird die Zwischenschaltung in eine Primärstufe und in eine Sekundärstufe dargestellt. Der Wäscher 12 wird je nach gewünschter Prozessführung und Anforderungen an den Reinigungsgrad bei einer der Primärzellen (P1, P2, P3, P4) installiert. Alternativ bzw. auch zusätzlich kann ein Wäscher 12' in den Kreislauf einer Sekundärzelle (S1, S2) zwischengeschaltet werden. Beispielhaft ist in Fig. 2 ein Wäscher 12 an der P2 und ein Wäscher 12' an der S2 dargestellt. Der Wäscher 12, 12' wird nach einer der Injektorpumpen 13 installiert.

Gegenüber dem Stand der Technik besitzt bei der Erfindung die Injektorpumpe 13 eine höhere Druckleistung bei gleichem Durchsatz. Ein Teilstrom der zu entaschenden Flüssigkeit wird in Bodennähe der Zelle P2, S2 vor Abfluss in die Folgezelle abgezogen und tritt nach Entaschung im Wäscher 12, 12' und Einstellung der Stoffdichte über den Diffusor 14, 14' in die gleiche Zelle ein. Es besteht auch die Möglichkeit bei mehreren Zellkammern eine Wäsche zwischenzuschalten. Die im Wäscher 12, 12' abgeschiedenen Füllstoffe und Feinstoffanteile (großteils Asche) werden einer Kläranlage zugeleitet. Der Entaschungsgrad kann mit den üblichen Maschinenparametern eingestellt werden. Durch die produktionsunabhängige Einstellung des Injektordurchlaufes gemäß dem Stand der Technik in Fig. 1 wird auch eine Abstimmung des Entaschungsgrades im Fertigstoff ermöglicht.

Wird erfindungsgemäß eine Vorwärtsschaltung des gesamten Produktionsstromes erwünscht oder eine Wäsche in eine bereits vorhandene DIP (de-inked pulp) Anlage nachinstalliert, kann der Gesamtstrom auch zwischen den Zellen entascht werden. Zur Erhaltung der Flotationseffizienz ist der Kreislaufstrom zu öffnen und vorteilhafterweise auf ca. 0,8 bis 1,3 % Stoffkonsistenz nachzuverdünnen

In Fig. 3 wird der Zulaufstrom 15 zur Sekundärzelle mit einem Wäscher 16 als Entaschungsvorrichtung behandelt, so dass die hydraulische Belastung der Sekundärzellen durch die Entfernung von Asche und Feinstoffen reduziert wird. Wesentlich dabei ist aber die gezielte Entfernung der Asche. Die Stoffbilanzen einer derartigen Anordnung sind gemäß Stand der Technik in Fig. 7 und gemäß der Erfindung in Fig. 8 dargestellt. Die in Fig. 3 dargestellte Variante zeigt die wirksamste Form der Teilstromwäsche, da beim Flotationsprozess im Schaum bereits eine starke Anreicherung der mineralischen Inhaltsstoffe stattfindet.

Beim Entaschungsvorgang wird der Gutstoff eingedickt. Damit die Stoffdichte bei der Sekundärflotation nicht zu hoch ist, wird die Faserstoffsuspension im Normalfall auf ca. 0,6 bis 1,4 % Stoffdichte verdünnt. Dieser Vorgang ist bei allen Entaschungsprozessen innerhalb der Flotation notwendig.

Eine weitere Möglichkeit der Entaschung ist in Fig. 4 dargestellt. Hier wird in zwei Teilströmen entascht. Zur weiteren Reduktion der Faserverluste werden die Entaschungsapparate 17, 17' in Kaskade geschaltet. Der an Füllstoffen verarmte Gutstoff aus dem weiteren Wäscher 18 wird in den Flotationsschaumbehälter 4 geführt und gemeinsam mit dem Überlaufschaum der Primärzellen in den Sekundärzellen nachflotiert. Das Rejekt, das mit Füll- und Feinstoffen stark angereichert ist, wird über eine nachgeschaltete DAF (Dissolved Air Flotation) oder eine Schlammpresse entsorgt.

In Fig. 5 ist eine mögliche Variante einer Entaschungsvorrichtung in Form eines Rotationswäschers 20 dargestellt. Die Suspension wird über den Zulaufstutzen 21 dem Wäscher 20 zugeführt. Durch einen stationären Einbau 22 wird der Suspensionsstrom strömungsgünstig in das Innere des zylindrischen Siebkorbes 23 umgelenkt. In diesem Raum befindet sich ein Rotor 24, der hier eine parabolische Form aufweist und mit Flügeln 25 versehen ist. Der durch das Sieb 23 hindurchgetretene Gutstoff wird in einem Akzeptraum 26 gesammelt und über den Akzeptauslass 27 ausgetragen. Der Rotor 24 wird durch Antrieb 28 angetrieben. Diese Art von Apparat hat einen geringen Energieverbrauch, was durch die gute Strömungsführung, insbesondere den parabolischen Rotor, erreicht wird. Durch spezielle Siebe und Flügelausführungen wird eine hohe Entaschung erzielt.

Fig. 6 zeigt eine alternative Ausgestaltung eines Wäschers als Walzenwäscher 30. Die Zufuhr der Suspension erfolgt über einen sogenannten Stoffauflauf 31, durch den die Suspension zwischen die Walze 32 und ein Sieb 33 eingedüst wird. Das Sieb 33 wird mittels einer Antriebsrolle 34 angetrieben und das Filtrat, d.h. der Gutstoff durch den Filtrataustrag 35 ausgetragen.

In Fig. 7 sind die Stoffströme bei einer Flotationsanlage 40 nach dem Stand der Technik dargestellt. Die Flotationsanlage besteht dabei aus den Primärzellen 41 und den Sekundärzellen 42. Der Suspensionszulauf 43 wird in die Primärzellen 41 geleitet, von wo der Überlauf 44 in die Sekundärzellen 42 geleitet wird. Der Gutstoff 45 wird aus den Primärzellen 41 abgeleitet, während der Überlauf 46 mit den angereicherten Feststoffen den Sekundärzellen 42 entnommen wird. An einigen Stellen des Systems wird noch Spritzwasser 47 zugeführt. Die Werte der einzelnen Stoffströme sind der nachfolgenden Tabelle 1 zu entnehmen.

**Tabelle 1**

| Bezeichnung | Nr. | Volumenstrom gesamt [I/min] | Feststoffanteil [%] | rel. Ascheanteil am Feststoff [%] |
|---|---|---|---|---|
| Zulauf | 43 | 15000 | 1,2 | 25,0 |
| Rückführung | 44 | 3200 | 1,07 | 66,0 |
| Durchlauf/ Gutstoff | 45 | 15500 | 1,07 | 21,2 |
| Ablauf/ Überlauf | 46 | 550 | 2,55 | 70,0 |
| Spritzwasser | 47 | 1050 | - | - |

Fig. 8 zeigt die Stoffströme einer Flotationsanlage 40 gemäß Fig. 3 mit den Primärzellen 41 und Sekundärzellen 42. Der Suspensionszulauf 43 wird in die Primärzellen 41 geleitet, von wo der Überlauf 44 in die Entaschungsvorrichtung, speziell den Wäscher 48 geleitet wird. Der "Gutstoff" 49 aus dem Wäscher 48 wird mittels Verdünnungswasser 52 auf eine Stoffdichte unter 1 % gebracht und bei 53 den Sekundärzellen 42 zugeführt. Der hoch füllstoffbeladene Anteil 50 aus dem Wäscher wird mit dem Überlauf 46 aus den Sekundärzellen 42 gemischt und als Gesamtüber-lauf 51 aus dem System ausgetragen. Die Werte der einzelnen Stoffströme sind der nachfolgenden Tabelle 2 zu entnehmen.

**Tabelle 2**

| Bezeichnung | Nr. | Volumenstrom gesamt [I/min] | Feststoffanteil [%] | rel. Ascheanteil am Feststoff [%] |
|---|---|---|---|---|
| Zulauf P1 | 43 | 15000 | 1,2 | 25,0 |
| Schaum Ablauf Primärzellen | 44 | 2550 | 1,11 | 64,8 |
| Durchlauf/ Gutstoff | 45 | 14480 | 1,11 | 17,2 |
| Überlauf Sekundärzellen | 46 | 30 | 2,3 | 72,7 |
| Spritzwasser | 47 | 1100 | - | - |
| Rücklauf nach Wäscher 48 | 49 | 240 | 3,9 | 14,7 |
| Ablauf nach Wäscher 48 | 50 | 2300 | 0,8 | 89,5 |
| Überlauf gesamt | 51 | 2330 | 0,8 | 88,9 |
| Verdünnungswasser | 52 | 720 | - | - |
| Rücklauf in Sekundärzellen | 53 | 960 | 0,97 | 14,7 |

Im Vergleich der Tabellen 1 und 2 kann man erkennen, dass bei gleichem Feststoff und Ascheeintrag beim Verfahren nach der Erfindung ein höherer Feststoffgehalt bei niedrigerem rel. Ascheanteil als Gutstoff erhalten wird. Somit wird praktisch doppelt soviel Asche ausgetragen, wie beim Verfahren nach dem Stand der Technik.

Wird die Anlage noch zusätzlich mit weiteren Wäschern für Teilströme, z.B. nach Fig. 2 oder 4 ausgestattet, sind noch höhere Entaschungsgrade realisierbar.

Die Entfernung eines großen Prozentsatzes des Füllstoffanteiles aus dem Produktionsstrom führt zu einem weiteren positiven Effekt und zwar zu einer zusätzlichen Entfernung von kleinen Druckpartikel, die im Flotationsprozess nur schwer abflotierbar sind. In Folge steigt der Weissegrad oder die Helligkeit mit an.

## Patentansprüche

1. Verfahren zur Belüftung von Suspensionen, insbesondere zur Flotation, beispielsweise beim Deinken von Faserstoffsuspensionen, mit einer oder mehr Stufen und / oder Zellen, wobei in jeder Stufe / Zelle ein eigener, getrennter Flüssigkeitskreislauf vorgesehen ist, **dadurch gekennzeichnet, dass** ein Waschprozess zwischengeschaltet ist.

2. Verfahren nach Anspruch 1, **dadurch gekennzeichnet, dass** der Waschprozess in den Flüssigkeitskreislauf einer Zelle, beispielsweise einer Primär- oder Sekundärzelle, zwischengeschaltet wird.

3. Verfahren nach Anspruch 1, **dadurch gekennzeichnet, dass** der Waschprozess zwischen den Zellenstufen, d.h. zwischen Primär- und Sekundärzellen zwischengeschaltet wird.

4. Verfahren nach Anspruch 3, **dadurch gekennzeichnet, dass** die Feststoffsuspension vor Eintritt in die Sekundärzellen auf ca. 0,6 - 1,4 % Stoffdichte, insbesondere 0,8 - 1,3 % Stoffdichte, verdünnt wird.

5. Verfahren nach einem der Ansprüche 1 bis 4, **dadurch gekennzeichnet, dass** zumindest in den Kreislauf zweier Zellen je ein Waschprozess zwischengeschaltet ist.

6. Verfahren nach Anspruch 5, **dadurch gekennzeichnet, dass** die Gutstoffströme der zumindest zwei Waschprozesse gemeinsam einem weiteren Waschprozess zugeführt werden.

7. Verfahren nach Anspruch 5 oder 6, **dadurch gekennzeichnet, dass** der/ die Rejektstoffström(e) des einen oder der mehreren Waschprozesse gemeinsam einem weiteren Waschprozess (Doppelwäsche) zugeführt werden.

8. Verfahren nach einem der Ansprüche 5 bis 7, **dadurch gekennzeichnet, dass** die zumindest zwei Waschprozesse in den Kreislauf von Primärzellen zwischengeschaltet sind.

9. Verfahren nach einem der Ansprüche 1 bis 8, **dadurch gekennzeichnet, dass** der Gutstoff des Gesamtverfahrens bei einem Eingangsfüllstoffgehalt von ca. 23 % und höher einen Ascheanteil von unter ca. 20 %, vorteilhaft unter 15 % aufweist.

10. Vorrichtung zur Belüftung von Suspensionen, insbesondere zur Flotation, beispielsweise beim Deinken von Faserstoffsuspensionen, mit einer oder mehreren Stufen und / oder Zellen (P1, P2, P3, P4, S1, S2), wobei in jeder Stufe / Zelle (P1, P2, P3, P4, S1, S2) ein eigener, getrennter Flüssigkeitskreislauf (6) vorgesehen ist, **dadurch gekennzeichnet, dass** ein Wäscher (12, 12', 16, 18) zwischengeschaltet ist.

11. Vorrichtung nach Anspruch 10, **dadurch gekennzeichnet, dass** der Wäscher (12, 12') in den Flüssigkeitskreislauf einer Zelle (P1, P2, P3, P4, S1, S2), beispielsweise einer Primär- oder Sekundärzelle, zwischengeschaltet wird.

12. Vorrichtung nach Anspruch 10, **dadurch gekennzeichnet, dass** der Wäscher (16) zwischen den Zellenstufen, d.h. zwischen Primär- und Sekundärzellen zwischengeschaltet wird.

13. Vorrichtung nach Anspruch 12, **dadurch gekennzeichnet, dass** zwischen Wäscher (16) und Sekundärzellen (S1, S2) eine Verdünnungswasserleitung (52) mündet.

14. Vorrichtung nach einem der Ansprüche 10 bis 13, **dadurch gekennzeichnet, dass** zumindest in den Kreislauf (6) zweier Zellen je ein Wäscher (12, 12') zwischengeschaltet ist.

15. Vorrichtung nach Anspruch 14, **dadurch gekennzeichnet, dass** die Gutstoffströme der zumindest zwei Wäscher (12, 12') gemeinsam einem weiteren Wäscher (18) zugeführt werden.

16. Vorrichtung nach Anspruch 14 oder 15, **dadurch gekennzeichnet, dass** die Rejektstoffströme der zumindest zwei Wäscher (12, 12') gemeinsam einem weiteren Wäscher zugeführt werden.

17. Vorrichtung nach einem der Ansprüche 14 bis 16, **dadurch gekennzeichnet, dass** die zumindest zwei Wäscher (12, 12') in den Kreislauf (6) von Primärzellen (P1, P2, P3, P4) zwischengeschaltet sind.

18. Vorrichtung nach einem der Ansprüche 10 bis 17, **dadurch gekennzeichnet, dass** der bzw. die Wäscher (12, 12', 16, 18) als Rotationswäscher (20) mit vertikaler Rotorachse ausgebildet ist bzw. sind.

19. Vorrichtung nach einem der Ansprüche 10 bis 17, **dadurch gekennzeichnet, dass** der bzw. die Wäscher (12, 12', 16, 18) als Walzenwäscher (30) ausgebildet ist bzw. sind.
